# NOUVEAU FASCICULE DE BREVET EUROPEEN

(11) **EP 0 628 602 B2**
(45) Date de publication et mention de la décision concernant l'opposition: **09.08.2006**
(45) Mention de la délivrance du brevet: 31.10.2001
(21) Numéro de dépôt: 94401310.1
(22) Date de dépôt: 10.06.1994
(51) Int. Cl.: C08L 77/00, C08L 77/06, C08L 77/02

(54) **Compositions polyamides transparentes sans déformation à chaud**
Transparente Polyamidzusammensetzungen ohne Wärmeverformung
Transparent polyamide compositions without heat deformation

(30) Priorité: 11.06.1993 FR 9307043
(43) Date de publication de la demande: 14.12.1994
(73) Titulaire: Arkema France, 92800 Puteaux (FR)
(72) Inventeur: Ballu, Guerric, F-73013 Paris (FR); Drouin-Ladouce, Béatrice, F-27300 Bernay (FR); Guerin, Bernard, F-91440 Bures Sur Yvette (FR); Melot, Denis, F-27300 Bernay (FR)
(74) Mandataire: Neel, Henry

(56) Documents cités:
- EP-A- 0 070 001
- EP-A- 0 279 342
- EP-A1- 0 550 308
- EP-A2- 0 553 581
- WO-A1-93/09182
- CH-A5- 673 029
- DE-A- 3 200 428
- DE-C2- 2 642 244
- FR-A1- 2 575 756
- FR-A1- 2 606 416
- JP-A- 60 215 054
- US-A- 4 268 661
- US-A- 4 410 661
- KUNSTSTOFFE vol. 79, 1989, pages 72 - 76
- PHYSICAL PROPERTIES OF POLYMERS HANDBOOK 1996, pages 401 - 407
- MACROMOLECULES vol. 24, 1991, pages 3845 - 3852

## Description

La présente invention a pour objet des compositions polyamides transparentes sans déformation à chaud et leur procédé de préparation. La présente invention se rapporte aussi aux objets obtenus à partir de ces compositions et aux procédés de préparation de tels objets.

Les polyamides sont des polymères très utilisés dans l'industrie et dans le domaine de la grande consommation pour leurs nombreuses propriétés. En effet, ces polyamides présentent certaines ou toutes des propriétés énumérées ci-après: transparence, résistance aux chocs, à la traction et/ou la compression, tenue élevée aux agressions extérieures, telles que froid, chaleur, agents chimiques, rayonnements notamment UV, et autres. Aussi a-t-on vu apparaître des objets du domaine courant à base de polyamides, tels que des montures de lunette, boîtiers divers, équipements pour automobile, matériels chirurgical, emballage, et autres. Ces objets "grand public" doivent le plus souvent porter des inscriptions diverses, comme les caractéristiques du produit vendu dans le cas d'un emballage réalisé en polyamide. Ces produits doivent aussi souvent être décorés lorsque le produit final est réalisé en polyamide et lorsque ce dernier doit être attractif vis-à-vis de la clientèle. Un exemple de produit devant être décoré se trouve dans le domaine de la lunetterie, domaine dans lequel la quasi-totalité des articles sont décorés. Un autre exemple de produits souvent décorés se trouve dans le domaine du flaconnage (flacons, bouchons, etc...) de produits cosmétiques, parfums, médicaments.

On a donc naturellement cherché à décorer les polyamides selon les techniques habituellement utilisées. Récemment, une technique de décoration a été mise au point. Cette technique, dite décoration par sublimation ou transfert thermique, consiste à recouvrir l'objet à décorer d'une couche de pigments à une température comprise entre 80 et 220 °C, et à chauffer l'ensemble à une température donnée. Les pigments sont dits sublimables, mais cette technique est efficace avec des pigments qui peuvent migrer dans la structure du polymère. En fait, l'homme de l'art comprend ce terme de "décoration par sublimation" sans qu'il soit nécessaire de développer plus en détail ici. La température à laquelle on porte l'objet à décorer doit être suffisamment élevée, pour provoquer la sublimation ou transfert thermique des pigments, qui peuvent alors pénétrer, par diffusion, dans la structure du polymère, si celui-ci présente une morphologie adéquate. Le polymère doit bien sûr résister à la température utilisée lors de la décoration par sublimation. Un exemple d'application de la technique de décor par sublimation est la lunetterie.

Cependant, les polyamides utilisésjusqu'à présent dans ce domaine ne présentent pas toujours les propriétés requises pour être décorés parsublimation. SI le polyamide est cristallin ou semi-cristallin, il résiste à des températures élevées et les conditions parfois sévères de mise en oeuvre de la décoration par sublimation peuvent être utilisées avec ce polyamide. Cependant, les polyamides cristallins ou semi-cristallins ne sont pas transparents et leur opacité les rend impropres à une utilisation lorsque la transparence est recherchée. Si le polyamide est amorphe, il est donc transparent et en raison de cette transparence pourrait convenir dans des applications où cette propriété de transparence est recherchée. Cependant, lorsque la température utilisée pour la sublimation est inférieure à la température de transition vitreuse, le polyamide ne présente pas une structure suffisamment désorganisée et les pigments sublimables diffusent difficilement dans la masse du polyamide. La couleur résultante est pâle et donc impropre à la commercialisation. Lorsque latempérature utilisée pour la sublimation est supérieure à latempérature detransition vitreuse, le polyamide se déforme de façon rédhibitoire et donc est impropre à l'usage auquel II est normalement destiné.

Le problème rencontré au cours de la mise en oeuvre du procédé de décor par sublimation se rencontre dans d'autres cas de figure. En effet, de nombreux traitements de polymères, notamment de polyamides, pour transformer ceux-ci impliquent des températures élevées.

On recherche donc des polyamides ou compositions polyamides transparentes qui supportent des températures de traitement élevées, et ceci sans se rétracter ou s'allonger de façon excessive. On recherche particulièrement des compositions polyamides qui se prêtent à la technique de décor par sublimation, qui implique des températures élevées pour la sublimation des pigments.

Les brevets FR-A-2 575 756 et FR-A-2 606 416 décrivent des compositions polyamides amorphes à base de BACM (bis-(4-aminocyclohexyl)-méthane), BAMCM (bis-(3-méthyl-4-aminocyclohexyl)-méthane), ou autres diamines cycloaliphatiques, d'acide iso-ou téréphtalique, et d'autres polyamides. Ces polyamides présentent des propriétés de transparence et sont utiles pour la fabrication d'objets moulés. Ce document décrit une température de moulage qui peut être aussi élevée que 310°C, l'exemple de mise en oeuvre des polyamides amorphes décrivant une température de 290°C. II n'est fait aucune mention d'un traitement ultérieurement au moulage par injection.

Aussi, JP-60-215053 et 60-215054 décrivent et revendiquent des alliages comprenant d'une part un polyamide transparent et d'autre part un polyamide cristallin. Le polyamide transparent est constitué de motifs aliphatiques en tant que composant monomère essentiel choisis parmi le lauryllactame, l'acide 12-aminododécanoïque ou 11-amino-undécanoïque, et des motifs cycliques. Les exemples donnés pour ces polyamides transparents font apparaître en tant que motifs cycliques une diamine cycloaliphatique, le bis-(4-aminocyclohexyl)-méthane et un diacide aromatique, l'acide isophtalique. Le polyamide cristallin est constitué de polyamide-12 et/ou -11, ou de copolyamide ayant comme monomère essentiel un motif 12 et/ou 11. Les conditions de mélange ne sont pas spécifiées, il est seulement indiqué que tout procédé connu est applicable. Les compositions résultantes sont transparentes. Ces compositions sont préparées par mélange selon des procédés classiques, mais il n'y a aucune mention de la température de mélange. Il n'est fait aucune mention non plus de la température de moulage des compositions polyamides.

Le brevet FR-A-2 021 910 décrit des compositions polyamides comprenant de 40 à 99% en poids d'un polyamide amorphe à base d'acides aromatiques et de 2,2,4- et/ou 2,4,4-triméthyl-hexaméthylène-diamine et 60 à 1 % en poids d'un polyamide detype nylon. Les objets obtenus présentent une transparence, une bonne rigidité, sont résistants aux chocs et à l'eau. Les polyamides sont utilisés pour la fabrication par moulage d'objets creux tels que des bouteilles. Les températures utilisées sont des températures classiques.

Le brevet US-A-4 404 317 décrit des compositions polyamides telles que 6,I/6,T/BACM,I/BACM,T qui présentent des propriétés utiles pour la fabrication d'objets. Ces polyamides sont obtenus par mélange à une température comprise entre 270 et 300 °C. Les mélanges présentent, selon ce document, des propriétés de résistance aux solvants, de stabilité thermique, de conservation des propriétés mécaniques dans des conditions humides.

Le mélange des polyamides tel que mis en oeuvre dans les cas récités ci-avant remplit les conditions imposées par les produits à mélanger, notamment les conditions inhérentes au polyamide cristallin. Ainsi, US-A-4 404 317 décrit les conditions de mélange, telles que la température, pour divers polyamides; en particulier, il est recommandé de ne pas dépasser 300°C à cause de la dégradation du polyamide cristallin ainsi que du polyamide amorphe. Il est aussi connu que les polyamides cristallins (dont le PA-12 ou PA-6,12) présentent une température de dégradation de l'ordre de 270°C, tant pour le moulage-injection que pour l'extrusion. Cette température peut être portée pour des temps très courts ou en présence d'un stabilisant à une température d'environ 300°C. Cette limite supérieure de température pour les mélanges mettant en oeuvre des polyamides cristallins est aussi décrite dans les notices techniques des sociétés EMS et Hüls relativement à leurs produits, respectivement Grilamid TR55 et Vestamid.

Les brevets JP82/087602 et JP-891239109 décrivent des procédés de décor par transfert thermique de pigments sublimables sur des polyesters. Il n'est pas fait mention de polyamides en tant que couche supportant un décor par sublimation.

Le brevet DE 3200428 A1 décrit des mélanges de polyamide partiellement cristallin et de polyamide amorphe. Les températures de mélange sont de 260 à 310°C, sur des machines classiques (p. 5 dernier paragraphe, p. 6 premier paragraphe). L'exemple 1 indique comme températures de mélange et d'extrusion respectivement 260-300°C et 260-280°C. Ainsi, dans la mesure où l'enseignement d'un document s'apprécie par ce qui est sérieusement envisagé par l'homme du métier, à savoir les données des exemples, ce document enseigne des températures de mélange et de transformation inférieures à 300°C.

Le brevet EP 279342 A1 décrit des mélanges de polyamide semi-cristallin (polyamide-6,6) et de polyamide amorphe (polyamide-6,1). Ce document ne décrit pas l'étape du mélange (compoundierung), et indique comme température de transformation 280°C (p. 3, 1.17 ; p. 5, I. 21), donc inférieure à 300°C.

Le brevet FR 2575756 décrit des mélanges de copolyamide transparent et de polyamide semi-cristallin. Le passage cité par la division d'examen n'indique aucune plage de températures pour l'étape de mélange d'une part, et pour l'étape ultérieure de transformation de ces mélanges d'autre part.

La présente invention foumit donc une composition polyamide comprenant un polyamide semi-cristallin et polyamide amorphe présentant une température de transition vitreuse et ne présentant pas de changement de phase pour la rendre transparente et traitable à chaud sans déformation, susceptible d'être obtenue par le mélange de ses constituants à une température supérieure ou égale à 300°C et d'une transformation à une température supérieure ou égale à environ 300°C, la transparence étant telle que le coefficient de transmission lumineuse est supérieur ou égal à 50%, mesuré à 700 nm et pour une épaisseur de 2 mm. Cette composition comprenant en poids 65 à 80% du dit polyamide semi cristallin et 35 à 20% du polyamide amorphe

Le terme « polyamide » employé dans la présente description couvre aussi les copolyamides, pouvant contenir des tiers monomères en une proportion n'affectant pas les qualités essentielles des polyamides.

Le terme « semi-cristallin » couvre les (co)polyamides présentant à la fois une température de transition vitreuse Tg et une température de fusion Tf. Ce terme « semi-cristallin » peut couvrir aussi des polyamides entièrement cristallins.

Le terme « amorphe » couvre des polyamides qui au contraire ne présentent pas de changement de phase, mais seulement une température de transition vitreuse Tg.

La définition selon la présente invention est conforme à celle communément acceptée dans l'art. On se référera avantageusement à la publication « ENPLAs, Booklet on Engineering Plastics », section 2.1, p. 12 - 13, Ed. 1991, et publiée par « The Japan Engineering Association ».

Dans les exemples 1 à 5 qui suivent, le polyamide cristallin employé est du PA-11. On comprendra donc que les intervalles de composition donnés dans ces exemples, ainsi que dans les revendications, peuvent varier en fonction du polyamide cristallin employé.

Le terme de "transformation" tel qu'employé en relation avec la définition de la présente invention signifie tout procédé de transformation applicable à des polymères. Des exemples de tels traitements sont: le moulage, l'injection-mulage, l'extrusion, et autres.

Avantageusement, ladite composition polyamide comprend, en poids:
68 à 77 % dudit polyamide semi-ristallin; et
32 à 23 % dudit polyamide amorphe.

Les polyamides utilisés dans la présente invention sont des polyamides semi-ristallins ou amorphes préparés de façon classique, connue dans l'art des polyamides. Les monomères de départ sont les monomères classiquement connus dans l'art.

Des mélanges de polyamides semi-cristallins et/ou amorphes peuvent aussi être utilisés dans le cadre de la présente invention.

A titre d'exemple de monomère de départ, on peut citer les monomères suivants, leur abréviation courante figurant entre parenthèses. Ces exemples sont illustratifs et nullement limitatifs.

Les diacides sont les diacides classiques, tels que les diacides aliphatiques ou aromatiques.

Les diacides aliphatiques peuvent être les diacides adipique (6), azélaïque (9), sébacique (10), dodécanoïque (12), etc.

Les diacides aromatiques peuvent être les diacides téréphtalique (T), isophtalique (I), etc.

Les diamines sont les diamines classiques, telles que les diamines aliphatiques, aromatiques, cycloaliphatiques, et les diverses diamines couramment utilisées.
Les diamines aliphatiques peuvent être la butylènediamine (4), l'hexaméthylènediamine (6 ou HMDA), les isomères de triméthylhexaméthylènediamine (TMHMDA), l'octaméthylènediamine (8), la décaméthylènediamine (10), la dodécaméthylènediamine (12), etc.
Les diamines aromatiques peuvent être la métaxlylènediamine (MXDA), etc.
Les diamines cycloaliphatiques peuvent être les isomères des bis-(4-aminocyclohexyl)-méthane (BACM), bis-(3-méthyl-4-aminocyclohexyl)méthane (BMACM), 2-2-bis-(3-méthyl-4-aminocyclohexyl)-propane (BMACP), etc. Les autres diamines couramment utilisées peuvent être l'isophoronediamine (IPDA), la 2,6-bis-(aminométhyl)-norbomane (BAMN), etc.

Les lactames sont les lactames classiques, tels que caprolactame (L6), lauryllactame (L12), etc.

Les aminoacides sont les aminoacides classiques, tels que l'acide amino-11-undécanoïque (11), l'acide N-heptylamino-11-undécanoïque (NHAU), etc.

Les polyamides semi-cristallins qui résultent de la condensation de ces monomères sont des polyamides aliphatiques ou semi-aromatiques.

Parmi les polyamides aliphatiques, on peut citer, à titre d'exemple et de façon non limitative, les (co)polyamides suivants :
polycaprolactame (PA-6); polyundécanamide (PA11); polylauryllactame (PA-12); polybutylène adipamide (PA-4,6); polyhexaméthylène adipamide (PA-6,6); polyhexaméthylène azélamide (PA-6,9); polyhexaméthylène sébaçamide (PA-6,10); polyhexaméthylène dodécanamide (PA-6,12); polydécaméthylène dodécanamide (PA-10,12); polydécaméthylène sébaçanamide (PA-10,10); méthylène dodécanamide (PA-12,12); polyamide-11/NHAU; polyamide-BACM,6; polyamide-BACM,10; polyamide-BACM,12; copolyamide-6/6,6; copolyamide 6/12; etc; et leurs mélanges.
Ces polyamides aliphatiques présentent classiquement un point de fusion façon non limltative, les (co)polyamides suivants: copolyamide-6/6,T; copolyamide-6,6/6,T; copolyamide-6,T/6,I; copolyamide-6,6/6,T/6, I; copolyamide-11/6,T; copolyamide-12/6,T; polymétaxylylène adipamide (PAMXDA,6); etc; et leurs mélanges.
Ces polyamides aromatiques présentent classiquement un point de fusion élevé, supérieur à 250 C, souvent supérieur à 300 C.

Les polyamides amorphes qui résultent de la condensation de ces monomères sont des polyamides classiques. Parmi ces polyamides amorphes, on peut citer, à titre d'exemple et de façon non limitative, les (co)polyamides suivants: polyhexaméthylène isophtalamide (6,1); polytriméthylhexaméthylène téréphtalamide (TMHMDA,T); Les copolyamides 6/BMACP,I; 6/BAMN,T; 11/BMACM,I; 11/BMACM,T/ BMACM,I; 11/BACM,I/IPDA,I; 12/BMACM,I; 12/BACM,T/BACM,I; 12/BMACM,T/ BMACM,I; 12/BACM,I/ IPDA,I; 6,T/6,IBACM,I; 6,T/6,1/BACM,T/BACM,I; etc; et leurs mélanges.

Les compositions selon la présente invention peuvent de plus comprendre des charges et/ou additifs classiques, en des proportions variables aisément déterminables par l'homme de l'art.
Les charges peuvent être des fibres, telles que des fibres de verre, de carbone, de polyarylamide, de titanate de potassium ou tout autre type de fibre. Les charges peuvent aussi être des poudres, telles que du talc. Les charges peuvent aussi être présentes sous des formes variées, comme par exemple sous forme billes ou de lamelles.
Les additifs peuvent être des antioxydants, des agents anti-UV, dès agents démoulants, des agents nucléants, des modifiants choc, des agents ignifugeants, des agents azurants, des colorants, des pigments, des plastifiants, etc, ou leurs mélanges.

Les compositions selon la présente invention sont transparentes et conduisent à des objets transparents.

Selon un mode de réalisation, la composition présente un coefficient de transmission lumineuse supérieur ou égal à 50%, mesuré à 700 nm et pour une épaisseur de 2 mm. Avantageusement, ce coefficient de transmission est compris entre 55 et 90 .

Ces compositions selon la présente invention sont utiles pour la fabrication d'objets munis de propriétés intéressantes, c'est-à-dire étant transparents, présentant de bonnes propriétés mécaniques et supportant un traitement impliquant une température élevée sans se déformer. Un exemple d'un tel traitement est le procédé de décor par sublimation. Les présentes compositions peuvent être utilisées dans un grand nombre de domaines, par exemple, à titre indicatif, les domaines des:
- matériels informatiques, électroniques, électrotechniques, hi-fi et électroménagers, tels que les boîtiers, les voyants, les écrans, les carters, etc;
- équipements liés aux transports, notamment automobile et motocycle, tels que les réservoirs, les tableaux de bord, les objets moulés et les canalisations diverses, etc;
- matériel médico-chirurgical et d'hygiène, tels que embouts, tubulures, vannes et embases de cathéters, cathéters, perfuseurs, sondes, flacons, brosses à dents, poches à liquide, etc;
- boîtiers de montre et autres appareils de mesure, tels que compteurs volumétriques, électriques, électroniques, etc;
- lunetterie optique, solaire, sportive et de sécurité;
- équipements et matériels de sport, tels que chaussures, planches à voile, raquettes de tennis, skis, palmes, masques de plongée sous-arine, etc;
- corps de briquets, stylos, etc;
- emballages, flaconnages (flacons, bouchons), panneaux publicitaires, écrans, etc.

Les propriétés des présentes compositions sont surprenantes. En effet, les polyamides sont mélangés à une température élevée, supérieure à environ 300 °C. US-P-4 404317 décrit des températures de mélange inférieures à 300 °C sous peine de dégradation du polyamide. De même, les fabricants habituels de polyamides, comme Hüls et EMS, recommandent des températures de mélange ou de compoundage inférieures à 300 °C. De façon surprenante, les présentes compositions sont mélangées à des températures plus élevées que la limite haute enseignée par l'art antérieur. De façon tout aussi étonnante, les présentes compositions sont ensuite obtenues par une transformation mise en oeuvre à une température elle aussi élevée, supérieure à environ 300 °C.

Ainsi, la présente invention a aussi pour objet un procédé de préparation de la présente composition, comprenant une étape de mélange et une étape de transformation, ladite étape de mélange étant mise en oeuvre à une température supérieure ou égale à environ 300 °C, et ladite étape de transformation étant mise en oeuvre à une température supérieure ou égale à environ 300 °C.

Selon un mode de réalisation, cette température de mélange est comprise entre 300 et 370 °C, habituellement entre 310 et 360 °C. Avantageusement, cette température est comprise entre 320 et 340 °C.

L'opération de mélange ou compoundage est effectuée dans tout dispositif approprié, tel qu'une extrudeuse, à profil malaxeur, un mélangeur Banbury, et autres.

La composition intermédiaire, une fois obtenue, peut être traitée par tout moyen connu dans l'art. La composition intermédiaire peut être débitée en joncs qui sont refroidis puis granulés, ou pulvérisés, ou la composition intermédiaire peut être préparée directement en granulés. La composition intermédiaire est alors utilisée pour la fabrication de la composition finale objet de l'invention.

Ainsi, la présente invention concerne aussi les objets obtenus à partir de la composition et le procédé de préparation de ces objets.

La composition intermédiaire sous diverses formes (granulés, joncs, etc) est soumise à un traitement ou transformation en vue de la préparation de la présente composition ou d'objets. Ce traitement ou transformation, ces deux termes étant utilisés de façon équivalente dans la présente description, correspond à un traitement au cours duquel a lieu une transformation, et consiste en tout traitement connu, comme par exemple le moulage, l'injection-moulage, l'extrusion, et autres. On obtient alors l'objet recherché.

Selon la présente invention, le traitement ou transformation est mis en oeuvre à une température également supérieure ou égale à environ 300 °C.

Selon un mode de réalisation, cette température de traitement est comprise entre 300 et 370 °C, habituellement entre 310 et 360 °C. Avantageusement, cette température est comprise entre 320 et 340 °C.

Lorsque le traitement consiste en un moulage par injection, la température du moule est comprise entre 30 et 120 °C. Avantageusement, cette température du moule est comprise entre 50 et 60 °C.

La composition peut être utilsée telle quelle, ou être soumise à un autre traitement ultérieur, connu dans l'art, comme un usinage, un passage à la presse, etc, incluant ou non un traitement thermique. Le terme objet utilisé dans la présente description désigne donc tant la compostion elle-même prise en son sens d'objet manufacturé que la composition ayant subi un autre traitement.

Les compositions selon la présente invention, ainsi préparées, présentent une variation de dimension inférieure à 10 %, après avoir été portées à un température comprise entre 110 C et une valeur inférieure au point de fusion du polyamide semi-cristallin utilisé dans la composition, pendant une durée comprise entre 1 seconde et 2 heures. Les objets obtenus à partir de cette composition présentent les mêmes propriétés de stabilité dimensionnelle.

Avantageusement, la variation de dimension est inférieure à 5 %, et de façon particulièrement avantageuse inférieure à 3 %. La stabilité dimensionnelle est essentiellement fonction, pour un polyamide donné, des proportions en poids des constituants dans la composition.

Selon une variante, la mesure de la variation dimensionnelle est effectuée après que les compositions aient été portées à une température de 160-170 °C pendant 30 min.

Ainsi, les compositions ou objets selon la présente invention résistent très bien à un stress thermique et donc sont adaptés aux précédés de traitement ultérieurs impliquant une température élevée, comme par exemple le procédé de décoration par transfert thermique ou sublimation. Cette stabilité dimensionnelle des présentes compositions ou objets obtenus à partir de celles-ci et selon le présent procédé permet donc d'élargir considérablement le champ d'application des polyamides entrant dans la composition selon la présente invention.

Les compositions ou objets obtenus par le procédé selon l'invention peuvent être par exemple facilement décorés selon la technique de la sublimation. Les conditions utilisées sont les conditions classiques dans l'art. La température est comprise entre 110 °C et 290 °C, de préférence entre 150 et 170 °C. La durée d'exposition en température est comprise entre 1 mn et 3 heures, de préférence entre 3 mn et 1 heure. On obtient alors un objet décoré par sublimation.

La présente invention concerne aussi ces compositions ou objets décorés par sublimation.

Les procédures de test sont décrites ci-après. Les contraintes et allongements au seuil et à la rupture sont déterminés selon la norme ISO R 527. Les éprouvettes de dimensions 150x10x4 mm sont préalablementconditionnées deux semaines à 23 °C et 50 % d'humidité relative (RH). Les modules, contrainte et flèche à la charge maximum ont été mesurés selon la norme ISO 178 sur des éprouvettes 80x10x4 mm. Le choc Charpy avec entaille en V a été déterminé selon la norme ISO 179. Les mesures de variation de longueur sont réalisées sur des éprouvettes haltères, moulées par injection à l'une de leurs extrémités, de dimension 80x4x2 mm de la façon suivante. 5 éprouvettes, après que l'on ait déterminé leurs longueurs respectives, sont placées à plat dans une étuve thermorégulée pendant 15 et 30 mn. Après ce laps de temps, les éprouvettes sont extraites de l'étuve, placées à plat pour un retour à la température ambiante de 23 °C et leurs longueurs respectives sont mesurées après une heure. Le pourcentage de variation de la longueur est calculé à partir de la dimension initiale des éprouvettes. L'absorption d'éthanol est mesurée sur des éprouvettes IFC d'épaisseur 2 mm et de poids environ 1 gramme, préalablement séchées, après deux jours d'immersion dans l'éthanol pur à 30°C. La valeur est donnée en pourcentage d'augmentation du poids initial (EtOH, 2j, %).

Les exemples ci-après servent à illustrer la présente invention et ne sont en aucun cas limitatifs de la portée de celle-ci.

### EXEMPLES 1 ET 2

Ces exemples ont été réalisés sur une extrudeuse bi-vis Werner 30 équipée d'un profil malaxeur, à une température matière de 330 à 340°C, à partir d'une part de polyamide seml-cristallin PA-11 de viscosité inhérente 1,38 dl/ g et d'autre part de polyamide semi-aromatique amorphe PA-12/BMACM, T/BMACM,I. Celui-ci est synthétisé par polycondensation à l'état fondu à partir de bis-(3-méthyl-4-aminocyclohexyl)-méthane (BMACM), de lauryllactame (L12) et d'acides iso- et téréphtalique (IA et TA) dans un rapport molaire 1/1/0,3/0,7. Ce polyamide amorphe présente une température de transition vitreuse de 170°C et une viscosité inhérente de 1,05 dl/g. Les mélanges à la sortie de la filière de l'extrudeuse Werner sont refroidis sous forme de jonc dans un bac rempli d'eau froide, découpés en granulés et étuvés à 80°C sous vide pendant 12 heures de façon à éliminer l'humidité.

Les mélanges secs sont moulés par injection sous forme des éprouvettes nécessaires aux tests dans différentes conditions de température d'injection dans un moule dont la température est régulée à 60°C. Les résultats sont reportés dans les tableaux la et Ib ci-après.

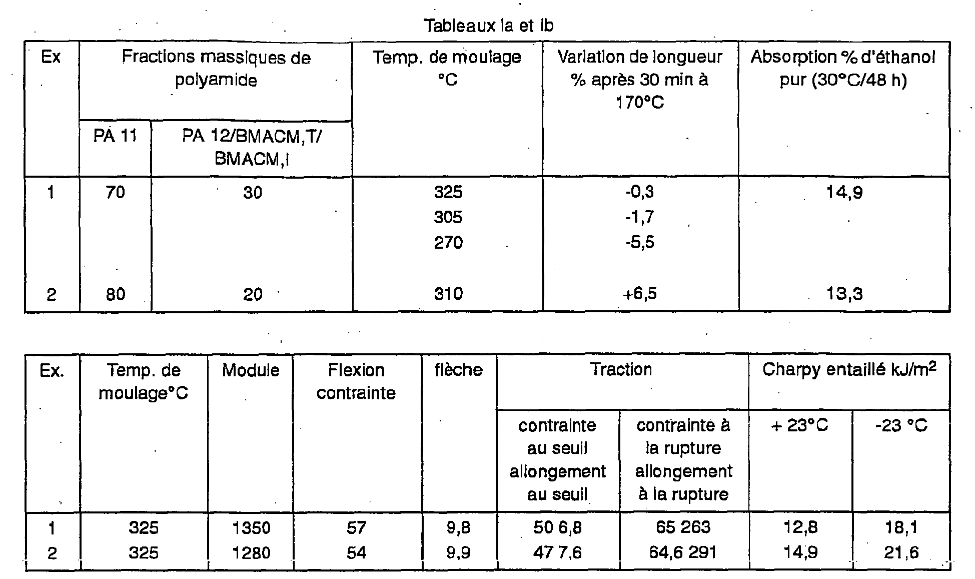

### EXEMPLES 3 A 8

Ces exemples ont été réalisés par compoundage sur extrudeuse bi-vis Werner 40 équipée d'un profil malaxeur, à partir de différents polyamides semi-cristallins et de différents polyamides amorphes (ici semi-aromatiques). Le ratio pondéral est de 70/30. Les mélanges en sortie de filière sont étirés sous forme de joncs, qui sont refroidis dans de l'eau froide puis découpés en granulés cylindriques. Les granulés sont ensuite séchés pendant 12 heures en étuve à 80 °C sous vide.

Les granulés sont alors moulés, aux températures indiquées dans le tableau II ci-après, par injection dans un moule dont la température est régulée à 50°C. On obtient des éprouvettes IFC de 2 mm d'épaisseur.

Le test de variation de la longueur a été effectué après exposition de 30 mn en étuve à air régulée à 160 °C.

Les résultats sont consignés dans le tableau II ci-après.

**Tableau II**

| Ex. | Mélanges 70/30 massiques réalisés | Température de compoundage °C | Température de moulage °C | Variation de longueur % |
|---|---|---|---|---|
| 3 | PA11:PA12/BMACM,T/ BMACM,I | 310 | 315 | -0,8 |
| 4 | PA12:PA12/BMACM,T/ BMACM,I | 350 | 310 | -0,3 |
| 5 | PA11:PA12/BMACM,I | 310 | 310 | -0,7 |
| 6 | PA11:PATMHMDA,T | 350 | 325 | -1,5 |
| 7 | PA6:PA TMHMDA,T | 330 | 325 | -2,2 |
| 8 | PA6,6:PATMHMDA,T | 340 | 325 | -1,8 |

## Revendications

1. Composition polyamide comprenant un polyamide semi-cristallin et un polyamide amorphe présentant une température de transition vitreuse et ne présentant pas de changement de phase pour la rendre transparente et traitable à chaud sans déformation, susceptible d'être obtenue par le mélange de ses constituants à une température supérieure ou égale à 300°C et d'une transformation à une température supérieure ou égale à 300°C, la transparence étant telle que le coefficient de transmission lumineuse est supérieur ou égal à 50%, mesuré à 700 nm et pour une épaisseur de 2 mm, cette composition comprenant, en poids:
65 à 80 % dudit polyamide semi-cristallin; et
35 à 20 % dudit polyamide amorphe.

2. Composition polyamide selon la revendication 1, **caractérisée en ce qu'**elle comprend, en poids:
68 à 77 % dudit polyamide semi-cristallin; et
32 à 23 % dudit polyamide amorphe.

3. Composition polyamide selon l'une quelconque des revendications 1 à 2, **caractérisée en ce que** le polyamide semi-cristallin est un polyamide semi-cristallin aliphatique.

4. Composition polyamide selon la revendication 3, **caractérisée en ce que** le polyamide semi- cristallin aliphatique est choisi dans le groupe consistant en les polyamides: PA6; PA-11; PA-12; PA-4,6; PA-6,6; PA-6,9; PA-6,10; PA-6,12; PA-10,12; PA-10,10; PA-12,12; les copolyamides PA-6/PA-12; 11/NHAU, BACM, 6; BACM,10; BACM,12; BMACM,12; PA6/6,6; et leurs mélanges.

5. Composition polyamide selon l'une quelconque des revendications 1 à 2, **caractérisée en ce que** le polyamide semi-cristallin est un polyamide semi-cristallin semi-aromatique.

6. Composition polyamide selon la revendication 5, **caractérisée en ce que** le polyamide semi- cristallin semi-aromatique est choisi dans le groupe consistant en les polyamides: PA-6/6,T; PA-6,6/6,T; PA-6,T/6,I; PA6,6/6,T/6,I; PA-11/6,T; PA-12/6,T; PAMXDA,6 et leurs mélanges.

7. Composition selon l'une quelconque des revendications 1 à 6, **caractérisée en ce que** le polyamide amorphe est choisi dans le groupe consistant en les polyamides: PA-6,I; -6/BMACP,I; -6/BAMN,T; -11/BMACM,I; -11/BMACM,-T/BMACM,I; -11/BACM, - I/IPDA,I; -12/BMACM,I; -12/BACM, -T/BACM, I;-12/BMACM, -T/BMACM,I; - 12/BACM,I/IPDA,I; 6,T/6,I/BACM,I; 6,T/6,I/BACM, T/BACM,I; TMHMDA,T; et leurs mélanges.

8. Composition polyamide selon l'une quelconque des revendications 1 à 7, **caractérisée en ce que** le coefficient de transmission est compris entre 55 et 90 %.

9. Composition selon l'une quelconque des revendications 1 à 8, **caractérisée en ce qu'**elle contient de plus des charges et/ou additifs classiques.

10. Composition selon l'une quelconque des revendications 1 à 8, **caractérisée en ce qu'**elle présente une variation de dimension inférieure à 10%, après avoir été portée à une température comprise entre 110°C et une valeur inférieure au point de fusion du polyamide semi-cristallin utilisé dans ladite composition, pendant une durée comprise entre 1 seconde et 2 heures.

11. Composition selon la revendication 11, **caractérisée en ce que** la variation de dimension est inférieure à 5%.

12. Composition selon la revendication 10 ou 11, **caractérisée en ce que** la mesure est effectuée après que la composition ait été portée à une température de 160°C pendant 30 mn.

13. Procédé de préparation de la composition selon l'une quelconque des revendications 1 à 12, comprenant une étape de mélange et une étape de transformation, **caractérisé en ce que** cette étape de mélange est mise en oeuvre à une température supérieure ou égale à environ 300°C et **en ce que** cette étape de transformation est mise en oeuvre à une température supérieure ou égale à 300°C.

14. Procédé selon la revendication 13, **caractérisé en ce que** la température de mélange est comprise entre 300 et 370°C.

15. Procédé selon la revendication 13 ou 14, **caractérisé en ce que** la température de mélange est comprise entre 320 et 340°C.

16. Procédé selon l'une quelconque des revendications 13 à 15, **caractérisé en ce que** la température de transformation est comprise entre 300 et 370°C.

17. Procédé selon l'une quelconque des revendications 13 à 16, **caractérisé en ce que** la température de transformation est comprise entre 320 et 340°C.

18. Procédé selon l'une quelconque des revendications 13 à 17, **caractérisé en ce que** la transformation de la composition consiste en un moulage, une injection, ou une extrusion de celle-ci.

19. Objet décoré obtenu par application de la technique de sublimation à une composition selon l'une quelconque des revendications 1 à 12.

## Claims

1. Polyamide composition which comprises a semi-crystalline polyamide and an amorphous polyamide, exhibiting a glass transition temperature and not exhibiting a phase change, to render it transparent and treatable under hot conditions without deformation and which is capable of being obtained by the blending of its constituents at a temperature of greater than or equal to 300°C and of a conversion at a temperature of greater than or equal to 300°C, the transparency being such that the light transmission coefficient is greater than or equal to 50%, measured at 700 nm and for a thickness of 2 mm, this composition comprising, by weight:
65 to 80% of the said semi-crystalline polyamide; and
35 to 20% of the said amorphous polyamide.

2. Polyamide composition according to Claim 1, **characterized in that** it comprises, by weight,
68 to 77% of the said semi-crystalline polyamide; and
32 to 23% of the said amorphous polyamide.

3. Polyamide composition according to either one of Claims 1 and 2, **characterized in that** the semi-crystalline polyamide is an aliphatic semi-crystalline polyamide.

4. Polyamide composition according to Claim 3, **characterized in that** the aliphatic semi-crystalline polyamide is chosen from the group consisting of the polyamides: PA-6; PA-11; PA-12; PA-4,6; PA-6,6; PA-6,9; PA-6,10; PA-6,12; PA-10,12; PA-10,10; PA-12,12; the copolyamides: PA-6/PA-12, 11/NHAU, BACM,6; BACM,10; BACM,12; BMACM,12; PA-6/6,6; and their blends.

5. Polyamide composition according to either one of Claims 1 and 2, **characterized in that** the semi-crystalline polyamide is a semi-aromatic semi-crystalline polyamide.

6. Polyamide composition according to Claim 5, **characterized in that** the semi-aromatic semi-crystalline polyamide is chosen from the group consisting of the polyamides: PA-6/6,T; PA-6,6/6,T; PA-6,T/6,I; PA-6,6/6,T/6,I; PA-11/6,T; PA-12/6,T; PAMXDA,6; and their blends.

7. Composition according to any one of Claims 1 to 6, **characterized in that** the amorphous polyamide is chosen from the group consisting of the polyamides: PA-6,I; -6/BMACP,I; -6/BAMN,T; -11/BMACM,I; -11/BMACM, T/BMACM,I; -11/BACM,I/IPDA,I; -12/BMACM,I; -12/BACM, T/BACM,I; -12/BMACM,T/BMACM,I; -12/BACM,I/IPDA,I; -6,T/6,I/BACM,I; -6,T/6,I/BACM,T/BACM,I; -TMHMDA,T; and their blends.

8. Polyamide composition according to any one of Claims 1 to 7, **characterized in that** the transmission coefficient is between 55 and 90%.

9. Composition according to any one of Claims 1 to 8, **characterized in that** it additionally comprises conventional fillers and/or additives.

10. Composition according to any one of Claims 1 to 8, **characterized in that** it exhibits a variation in dimension of less than 10%, after having been brought to a temperature of between 110°C and a value below the melting point of the semi-crystalline polyamide used in the said composition for a period of time of between 1 second and 2 hours.

11. Composition according to Claim 10, **characterized in that** the variation in dimension is less than 5%.

12. Composition according to Claim 10 or 11, **characterized in that** the measurement is made after the composition has been brought to a temperature of 160°C for 30 min.

13. Process for the preparation of the composition according to any one of Claims 1 to 12 comprising a blending stage and a conversion stage, **characterized in that that** this blending stage is carried out at a temperature of greater than or equal to approximately 300°C and **in that** this conversion stage is carried out at a temperature of greater than or equal to 300°C.

14. Process according to Claim 13, **characterized in that** the blending temperature is between 300 and 370°C.

15. Process according to Claim 13 or 14, **characterized in that** the blending temperature is between 320 and 340°C.

16. Process according to any one of Claims 13 to 15, **characterized in that** the conversion temperature is between 300 and 370°C.

17. Process according to any one of Claims 13 to 16, **characterized in that** the conversion temperature is between 320 and 340°C.

18. Process according to any one of Claims 13 to 17, **characterized in that** the conversion of the composition consists of a moulding, an injection moulding or an extrusion of the latter.

19. Decorated item obtained by application of the sublimation technique to a composition according to any one of Claims 1 to 12.

## Patentansprüche

1. Polyamidzusammensetzung, die ein halbkristallines Polyamid und ein amorphes Polyamid umfasst, die eine Glasübergangstemperatur aufweist und keine Phasenveränderung aufweist, um sie transparent und ohne Deformation warmbehandelbar zu machen, die durch die Mischung ihrer Bestandteile bei einer Temperatur über oder gleich 300°C und der Transformation bei einer Temperatur über oder gleich 300°C erhalten werden kann, wobei die Transparenz derart ist, dass der Lichtdurchlässigkeitskoeffizient, gemessen bei 700 nm und für eine Dicke von 2 mm, über oder gleich 50 % ist, wobei diese Zusammensetzung in Gewicht umfasst:
65 bis 80 % des halbkristallinen Polyamids; und
35 bis 20 % des amorphen Polyamids.

2. Polyamidzusammensetzung nach Anspruch 1, **dadurch gekennzeichnet, dass** sie in Gewicht umfasst:
68 bis 77 % des halbkristallinen Polyamids; und
32 bis 23 % des amorphen Polyamids.

3. Polyamidzusammensetzung nach einem der Ansprüche 1 bis 2, **dadurch gekennzeichnet, dass** das halbkristalline Polyamid ein aliphatisches halbkristallines Polyamid ist.

4. Polyamidzusammensetzung nach Anspruch 3, **dadurch gekennzeichnet, dass** das aliphatische halbkristalline Polyamid ausgewählt ist aus der Gruppe bestehend aus den Polyamiden: PA6; PA-11; PA-12; PA-4,6; PA-6,6; PA-6,9; PA-6,10; PA-6,12; PA-10,12; PA-10,10; PA-12,12; den Copolyamiden PA-6/PA-12; 11/NHAU, BACM, 6; BACM,10; BACM,12; BMACM,12; PA6/6,6; und deren Mischungen.

5. Polyamidzusammensetzung nach einem der Ansprüche 1 bis 2, **dadurch gekennzeichnet, dass** das halbkristalline Polyamid ein halbaromatisches halbkristallines Polyamid ist.

6. Polyamidzusammensetzung nach Anspruch 5, **dadurch gekennzeichnet, dass** das halbaromatische halbkristalline Polyamid ausgewählt ist aus der Gruppe bestehend aus den Polyamiden: PA-6/6,T; PA-6,6/6,T; PA-6,T/6,I; PA6,6/6,T/6,I; PA-11/6,T; PA-12/6,T; PAMXDA,6 und ihren Mischungen.

7. Zusammensetzung nach einem der Ansprüche 1 bis 6, **dadurch gekennzeichnet, dass** das amorphe Polyamid ausgewählt ist aus der Gruppe bestehend aus den Polyamiden:
PA-6,I; -6/BMACP,I; -6/BAMN,T; -11/BMACM,I; -11/BMACM; -T/BMACM,I; -11/BACM; -I/IPDA,I; -12/BMACM,I; -12/BACM; -T/BACM, I;-12/BMACM, -T/BMACM,I; -12/BACM,I/IPDA,I; 6,T/6,I/BACM,I; 6,T/6,I/BACM, T/BACM,I; TMHMDA,T; und ihren Mischungen.

8. Polyamidzusammensetzung nach einem der Ansprüche 1 bis 7, **dadurch gekennzeichnet, dass** der Durchlässigkeitskoeffizient zwischen 55 und 90 % liegt.

9. Zusammensetzung nach einem der Ansprüche 1 bis 8, **dadurch gekennzeichnet, dass** sie zusätzlich klassische Ladungen und/oder Zusatzstoffe enthält.

10. Zusammensetzung nach einem der Ansprüche 1 bis 8, **dadurch gekennzeichnet, dass** sie eine Variation der Ausdehnung unter 10 % aufweist, nachdem sie während einer Dauer zwischen 1 Sekunde und 2 Stunden auf eine Temperatur zwischen 110°C und einem Wert unterhalb des Schmelzpunkts des halbkristallinen Polyamids gebracht wurde, das in der Zusammensetzung verwendet wird.

11. Zusammensetzung nach Anspruch 11, **dadurch gekennzeichnet, dass** die Variation der Ausdehnung unterhalb 5 % liegt.

12. Zusammensetzung nach Anspruch 10 oder 11, **dadurch gekennzeichnet, dass** die Messung ausgeführt wird, nachdem die Zusammensetzung während 30 Min. auf eine Temperatur von 160°C gebracht wurde.

13. Verfahren zur Herstellung der Zusammensetzung nach irgendeinem der Ansprüche 1 bis 12, das einen Schritt des Mischens und einen Schritt der Transformation umfasst, **dadurch gekennzeichnet, dass** dieser Schritt des Mischens bei einer Temperatur über oder gleich etwa 300°C durchgeführt wird, und **dadurch**, dass dieser Schritt der Transformation bei einer Temperatur über oder gleich 300°C durchgeführt wird.

14. Verfahren nach Anspruch 13, **dadurch gekennzeichnet, dass** die Temperatur der Mischung zwischen 300 und 370 °C liegt.

15. Verfahren nach Anspruch 13 oder 14, **dadurch gekennzeichnet, dass** die Temperatur der Mischung zwischen 320 und 340 °C liegt.

16. Verfahren nach einem der Ansprüche 13 bis 15, **dadurch gekennzeichnet, dass** die Transformationstemperatur zwischen 300 und 370 °C liegt.

17. Verfahren nach einem der Ansprüche 13 bis 16, **dadurch gekennzeichnet, dass** die Transformationstemperatur zwischen 320 und 340°C liegt.

18. Verfahren nach einem der Ansprüche 13 bis 17, **dadurch gekennzeichnet, dass** die Transformation der Zusammensetzung in einem Formguss, einer Formspritzung oder einer Extrusion derselben besteht.

19. Geschmücktes Objekt, das durch die Anwendung der Sublimationstechnik auf eine Zusammensetzung nach irgendeinem der Ansprüche 1 bis 12 erhalten wird.
